# EUROPEAN PATENT APPLICATION

(11) **EP 3 345 776 A1**
(43) Date of publication of application: **11.07.2018**
(21) Application number: 17210693.2
(22) Date of filing: 27.12.2017
(51) Int. Cl.: B60C 15/00

(54) **PNEUMATIC TIRE**

(30) Priority: 27.12.2016 KR 20160179932
(71) Applicant: Hankook Tire Co., Ltd., Seoul 06133 (KR)
(72) Inventor: PARK, Moon Cheol, 34111 Daejeon (KR); HEO, Woo Haeng, 35218 Daejeon (KR); KIL, Ki Jong, 34119 Daejeon (KR)
(74) Representative: D Young & Co LLP

(57) **Abstract**

A pneumatic tire, and more particularly, a pneumatic tire that enhances durability and productivity of a carcass edge portion is provided. The pneumatic tire including a tread portion 100, a side wall portion 200, and a bead portion 300 and in which a carcass 400 is installed at the bottom of the side wall portion 200 and the tread portion 100, wherein the carcass 400 is configured with a bottom carcass sheet 410 and an upper carcass sheet 420, one end of the bottom carcass sheet 410 has a termination point 411 at a position that winds up a bead core 310 of the bead portion 300 in an outward direction, and one end of the upper carcass sheet 420 has a termination point 421 at an inner side surface of the bead portion 300.

## Description

### CROSS-REFERENCE TO RELATED APPLICATION

This application claims priority to and the benefit of Korean Patent Application No. 10-2016-0179932, filed on December 27, 2016, the disclosure of which is incorporated herein by reference in its entirety.

### BACKGROUND OF THE INVENTION

### Field of the invention

The present invention relates to a pneumatic tire, and more particularly, to a pneumatic tire in which durability and productivity of a carcass edge portion are enhanced.

### Description of the Related Art

In a structure of a vehicle tire, a carcass performs a frame function of the tire and performs a very important function in determining a tire profile. Therefore, a structure and material of the carcass of the vehicle tire has been very variously developed.

In various carcass structures, when a width of a carcass is large and a section height of a tire is low, an end portion of the carcass may be adjacent to an end portion of a tread and an end portion of a bead filler or an end portion of the carcass may easily meet with an end portion of a tread and an end portion of a bead filler, and the end portion of the carcass cannot help positioning at a flexible zone and thus durability of the tire is weak. That is, because the end portion of the carcass may become a generation cause of a crack, an enhancement effort thereof is required.

Hereinafter, the conventional art of durability enhancement of a carcass will be described. Reference numerals of the following conventional art are unrelated to the present invention.

Korean Utility Model No. 0130554 relates to a 'pneumatic tire that enhances durability of carcass turn-up end portion', wherein by positioning and shaping a soft apex 3 on a hard apex 2 in a normal tire, but by shaping an interface of the soft apex and the hard apex to gradually increase from the inside to the outside of the carcass, an upper end portion of the hard apex is positioned on the carcass turn-up end and thus a strength difference between the carcass turn-up end portion and an apex adjacent thereto is reduced, whereby durability of the carcass turn-up portion is enhanced. However, the above technology represents an example to which one carcass is applied and thus entire durability may be insufficient.

Korean Patent No. 10-0315653 relates to a 'pneumatic tire that enhances durability of carcass' that can obtain an installation effect of three carcasses with one carcass turn-up installed in a bead portion. In a conventional carcass layered structure, first, second, and third carcasses 12, 13, and 14 enclose a bead portion 20, by turning up each carcass end portion at a predetermined gap in a side portion and a bead portion, concentration of a stress occurring by a repeated bending and stretching movement by a weight up running the tire may be distributed, but concentration of a stress occurring in a carcass end portion cannot be completely mitigated and thus durability of the carcass end portion is very weak and thus there is a problem that a separation frequent occurs, whereas in the present invention, in a carcass turn-up installed in a bead portion, one end 10 of one carcass 1 is wound in a bead core 3 of the other side by starting from the bottom surface of a bead core 2 of one side and is again wound in the bead core 2 of the one side, and a front end portion 11 of the carcass 1 is positioned at the bottom of the bead core 3 of the other side and thus an effect of installing three carcasses with one carcass can be obtained, a shaping process and a production process of a half-finished product can be shortened, and a separation occurring at an end portion of the carcass is prevented.

### [Prior art document]

(Patent document 1) Korean Utility Model No. 0130554 (Laid-open date, July 20, 1995)
(Patent document 2) Korean Patent No. 10-0315653 (Laid-open date, June 15, 2001)

### SUMMARY OF THE INVENTION

### Technical Problem

The present invention has been made in an effort to provide a pneumatic tire for a vehicle for preventing separation of a carcass edge portion.

The technical problems of the present invention are not limited to the above-described technical problems and the other technical problems will be understood by those skilled in the art from the following description.

In accordance with an exemplary embodiment, a pneumatic tire including a tread portion 100, a side wall portion 200, and a bead portion 300 and in which a carcass 400 is installed at the bottom of the side wall portion 200 and the tread portion 100, wherein the carcass 400 is configured with a bottom carcass sheet 410 and an upper carcass sheet 420, one end of the bottom carcass sheet 410 has a termination point 411 at a position that winds up a bead core 310 of the bead portion 300 in an outward direction, and one end of the upper carcass sheet 420 has a termination point 421 at an inner side surface of the bead portion 300.

### Advantageous Effect(s) of the Invention

According to an exemplary embodiment of the present invention, when one end of an upper carcass sheet of two carcass sheets is configured to have a termination point at an inner side surface of a bead portion, a separation by a carcass edge portion is prevented and thus durability can be improved.

Further, compared with a conventional structure to which low carcass turn-up (LTUH) of two carcasses is applied, a weight of that of the present invention is reduced by 100±30g. This corresponds to about 1% of an entire tire weight, a tire can have a light weight due to weight reduction, and a rolling resistance (RR) performance can be enhanced.

Further, by reducing a cost of two carcass half-finished products, a tire production cost can be reduced. When tires having a structure of two pieces (2-0) are produced by 50 million pieces a year, if a two carcass structure according to the present invention is applied, a cost reduction effect of about 130 billion won a year is estimated.

Further, in a case of low series having a low bead filler height, because a carcass turn up edge does not exist at a periphery of a bead filler edge, there is a merit that the low series are advantageous in a durability performance of a bead portion.

The effects of the present invention are not limited to the above-described effects and it should be understood that the effects include entire effects that can be deduced from a configuration of the invention described in a detailed description of the present invention or claims.

### BRIEF DESCRIPTION OF THE DRAWINGS

FIG. 1 is a diagram illustrating a turn-up state of a conventional tire to which two carcasses are applied.
FIG. 2 is a table illustrating classification according to a position of a carcass end portion turned up in a bead portion.
FIG. 3 is a partially cross-sectional view illustrating a turn-up state of a conventional tire to which two carcasses are applied.
FIG. 4 is a partially cross-sectional view illustrating a pneumatic tire according to an exemplary embodiment of the present invention.

### DETAILED DESCRIPTION OF THE INVENTION

Hereinafter, the present invention will be described in detail with reference to the attached drawings. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Throughout this specification and the claims that follow, when it is described that an element is "connected (accessed, contact, and coupled)" to another element, the element may be "directly connected" to the other element and "indirectly connected" to the other element through a third element. Further, unless explicitly described to the contrary, the word "comprise" and variations such as "comprises" or "comprising", will be understood to imply the inclusion of stated elements but not the exclusion of any other elements.

Terms used in the present application are used for describing a specific exemplary embodiment and do not limit the present invention. When using in a description of the present invention and the appended claims, a singular form includes a plurality of forms unless it is explicitly differently represented. Further, in the present specification, a term "comprise" or "have" indicates presence of a characteristic, numeral, step, operation, element, component, or combination thereof described in a specification and does not exclude presence or addition of at least one other characteristic, numeral, step, operation, element, component, or combination thereof.

Hereinafter, an exemplary embodiment according to the present invention will be described in detail with reference to the attached drawings.

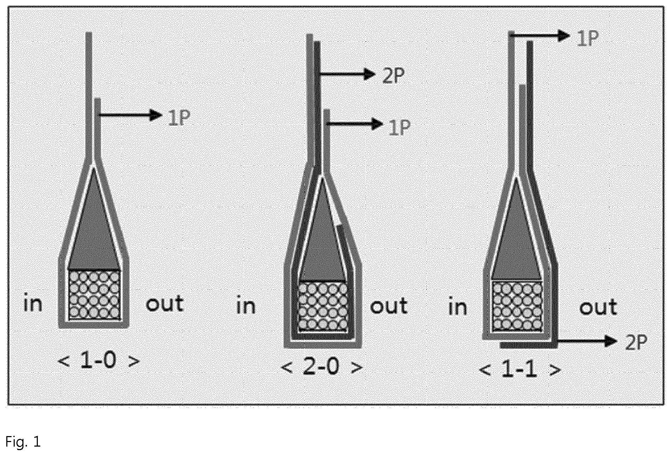

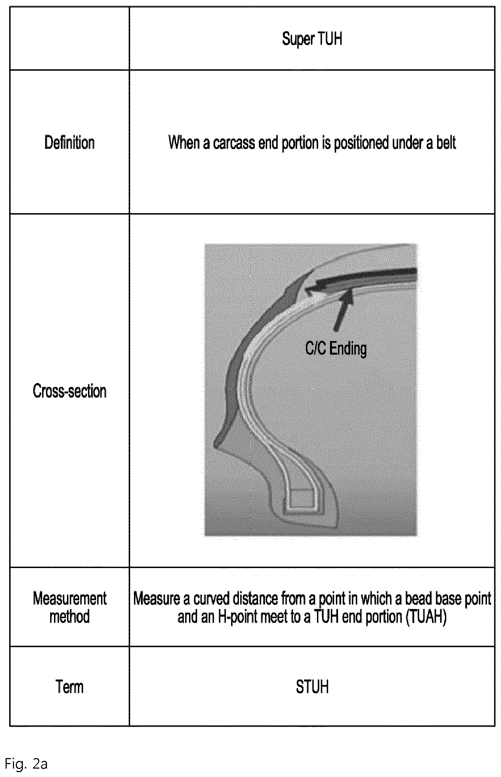

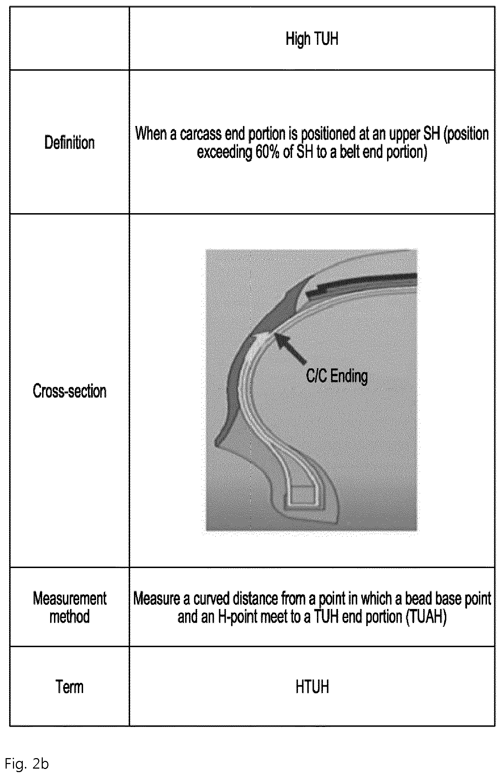

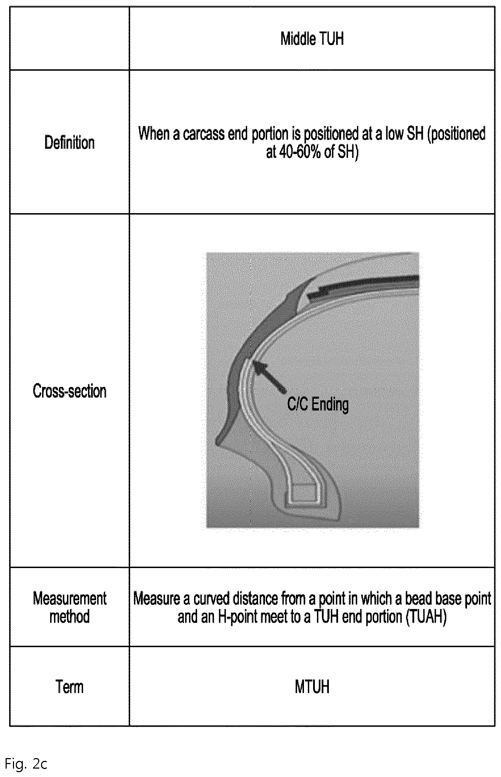

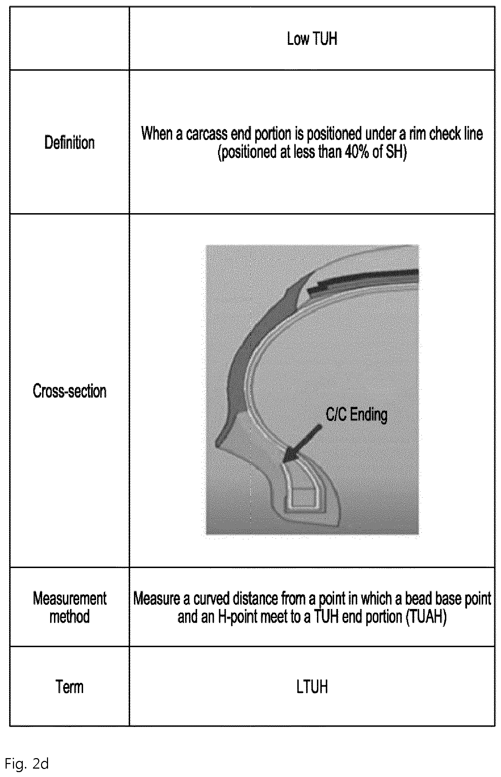

FIG. 1 is a diagram illustrating a turn-up state of a conventional tire to which two carcasses are applied, and FIG. 2 is a table illustrating classification according to a position of a turned up carcass end portion in a bead portion. A carcass structure is classified into a so-called super turn-up height (STUH), high turn-up height (HTUH), a middle turn-up height (MTUH), and a low turn-up height (LTUH). A small diameter shaping method generally has a structure of 1-0 and 2-0 of FIG. 1. A large diameter shaping method has a structure of 1-1 instead of a structure of 2-0.

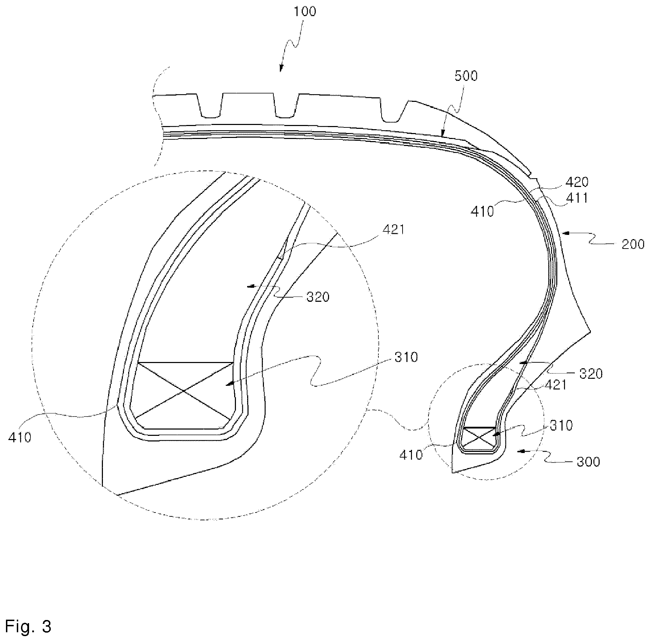

In such a conventional configuration, FIG. 3 illustrates a case in which two carcasses are applied to a structure of 2-0 of FIG. 1. In FIG. 3, a bottom carcass sheet 410 is turned up using a bead core 310 as one shaft, and a position of a termination point 411, which is a turn-up edge is positioned at a side wall portion 200. An upper carcass sheet 420 is turned up using the bead core 310 as one shaft, and a position of a termination point 421, which is a turn-up edge is positioned at an external side portion of a bead filler 320. In this case, at an external side portion of the bead filler 320 at which the termination point 421 is positioned, there is a high possibility in which separation is to be started, and this is disadvantageous in durability of a bead portion. Further, in order to secure durability of a tire, there is a restriction that the termination point 421 of the upper carcass sheet 420 and an edge portion of the bead filler 320 should be separated by a predetermined gap or more.

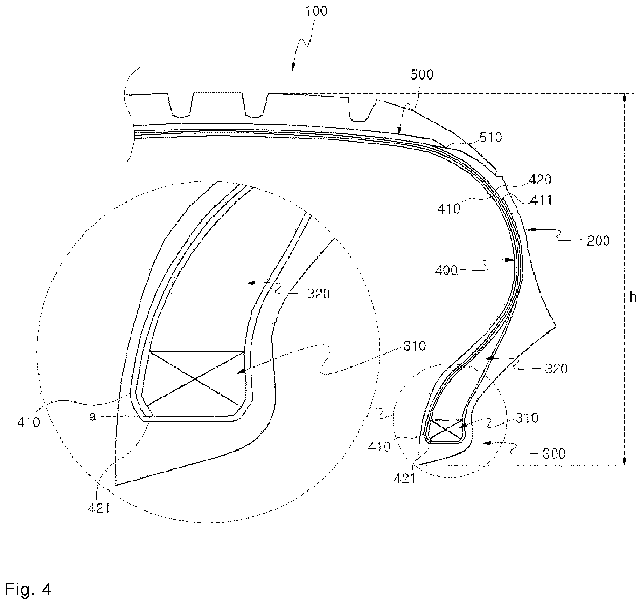

Accordingly, as shown in FIG. 4, in a pneumatic tire according to the present invention including a tread portion 100, the side wall portion 200, and a bead portion 300 and in which a carcass 400 is installed at the bottom of the side wall portion 200 and the tread portion 100, the carcass 400 is configured with the bottom carcass sheet 410 and the upper carcass sheet 420, one end of the bottom carcass sheet 410 has a termination point 411 at a position that winds up the bead core 310 of the bead portion 300 in an outward direction, and one end of the upper carcass sheet 420 has the termination point 421 at an inner side surface of the bead portion 300.

According to the above configuration, by enabling a turn-up edge portion not to be formed at the outside of the tire by not turning up the upper carcass sheet 420, a cause of separation of the bead portion is removed.

In order to more completely remove a separation cause, it is preferable that the termination point 421 of the upper carcass sheet 420 is positioned on a straight line a of the bottom surface of the bead core 310.

The termination point 411 of one end of the bottom carcass sheet 410 may be positioned at an end portion 510 of a belt portion 500 or a position exceeding the end portion 510, may be positioned between the end portion 510 of the belt portion 500 and a 60% point of a tire height h, may be positioned at a segment from a 40% point to a 60% point of a tire height h, or may be positioned between an outer side surface of the bead core 310 and a point 40% of a tire height h. The position is determined by a tire size or whether a protrusion exists on the tire side wall portion 200.

The foregoing description of the present invention is an illustration, and it may be understood by a person of ordinary skill in the art that the present invention may be easily changed in different detailed forms without changing the technical spirit or an essential characteristic of the present invention. Therefore, it should be understood that the foregoing exemplary embodiments are not limited but are illustrative. For example, each constituent element described in a single type may be distributedly performed, and constituent elements described in a distributed type may be performed in a combined form.

The scope of the present invention is represented by claims to be described later, and it should be analyzed that a meaning and the scope of claims and an entire change or a changed form derived from an equivalent concept thereof are included in the scope of the present invention.

### Reference Numerals from the Figures

- 100:: tread portion
- 200:: side wall portion
- 300:: bead portion
- 400:: carcass
- 410:: bottom carcass sheet
- 411:: termination point
- 420:: upper carcass sheet
- 421:: termination point
- 500:: belt portion
- 510:: end portion

## Claims

1. A pneumatic tire comprising a tread portion 100, a side wall portion 200, and a bead portion 300 and in which a carcass 400 is installed at the bottom of the side wall portion 200 and the tread portion 100, wherein the carcass 400 is configured with a bottom carcass sheet 410 and an upper carcass sheet 420,
one end of the bottom carcass sheet 410 has a termination point 411 at a position that winds up a bead core 310 of the bead portion 300 in an outward direction, and
one end of the upper carcass sheet 420 has a termination point 421 at an inner side surface of the bead portion 300.

2. The pneumatic tire of claim 1, wherein the termination point 411 of one end of the bottom carcass sheet 410 is positioned at an end portion 510 of a belt portion 500 or a position exceeding the end portion 510.

3. The pneumatic tire of claim 1, wherein the termination point 411 of one end of the bottom carcass sheet 410 is positioned between an end portion 510 of a belt portion 500 and a 60% point of a tire height h.

4. The pneumatic tire of claim 1, wherein the termination point 411 of one end of the bottom carcass sheet 410 is positioned at a segment from a 40% point to a 60% point of a tire height h.

5. The pneumatic tire of claim 1, wherein the termination point 411 of one end of the bottom carcass sheet 410 is positioned at a segment between an outer side surface of the bead core 310 and a 40% point of a tire height h.
